# EUROPEAN PATENT APPLICATION

(11) **EP 4 310 054 A1**
(43) Date of publication of application: **24.01.2024**
(21) Application number: 22771471.4
(22) Date of filing: 16.03.2022
(51) Int. Cl.: C01G 25/02, B01J 13/00

(54) **METHOD FOR PRODUCING LIQUID DISPERSION OF METAL OXIDE CONTAINING ZIRCONIUM ELEMENT, AND LIQUID DISPERSION OF METAL OXIDE CONTAINING ZIRCONIUM ELEMENT**

(30) Priority: 18.03.2021 JP 2021044789
(71) Applicant: Sakai Chemical Industry Co., Ltd., Sakai-shi, Osaka 590-8502 (JP)
(72) Inventor: IEDA, Takuma, Sakai-shi, Osaka 590-0985 (JP); FUKUROI, Kappei, Sakai-shi, Osaka 590-0985 (JP); MORITA, Takanori, Sakai-shi, Osaka 590-0985 (JP); OGATA, Hironobu, Sakai-shi, Osaka 590-0985 (JP)
(74) Representative: Cabinet Beau de Loménie
(86) International application number: PCT/JP2022/011894
(87) International publication number: WO 2022/196726

(57) **Abstract**

An object of the present invention is to provide a dispersion of a zirconium element-containing metal oxide having high transparency and low viscosity even at high concentration. The present invention relates to a method of producing a zirconium element-containing metal oxide dispersion, and the production method includes a step of heating a slurry containing a zirconium element-containing compound as a metal element-containing compound to perform a hydrothermal reaction, in which the heating in the hydrothermal reaction step is performed at a temperature rising rate of 90°C/hour or more.

## Description

### TECHNICAL FIELD

The present invention relates to a method of producing a zirconium element-containing metal oxide dispersion and a zirconium element-containing metal oxide dispersion.

### BACKGROUND ART

A composition obtained by blending a metal oxide with a resin for the purpose of improving properties of the resin including mechanical strength and imparting new properties is used as electronic component materials, optical materials, and the like. Among the metal oxides to be blended in the resin, zirconium oxide capable of increasing the refractive index of the resin is often used in resin compositions for optical material applications. When zirconium oxide is blended in a resin, the zirconium oxide is often blended as a dispersion in the resin, and the dispersion of zirconium oxide is required to have high transparency and low viscosity even at high concentration. For this reason, various zirconium oxide dispersions as described above and methods of producing the same have been proposed (see Patent Literatures 1 to 6).

### CITATION LIST

### - Patent Literature

Patent Literature 1: JP 5397829 B
Patent Literature 2: JP 2010-150066 A
Patent Literature 3: JP 2014-080361 A
Patent Literature 4: JP 2020-33194 A
Patent Literature 5: JP 2020-33195 A
Patent Literature 6: JP 2020-33196 A

### SUMMARY OF INVENTION

### - Technical Problem

As described above, the dispersion of the zirconium element-containing metal oxide such as zirconium oxide is a useful material used in various fields such as optical material applications. In general, it is known that the transparency of the zirconium element-containing metal oxide dispersion depends on the primary particle diameter of the zirconium element-containing metal oxide, and by using the zirconium element-containing metal oxide having a small primary particle diameter, a dispersion having high transparency required for optical material applications can be obtained. However, the zirconium element-containing metal oxide having a small primary particle diameter has a large specific surface area, and has a high viscosity in the state of a dispersion, and it is particularly difficult to reduce the viscosity when the concentration of the dispersion is high. In particular, the dispersion of the zirconium element-containing metal oxide used by being blended in the resin is required to have low viscosity, and development of a dispersion having high transparency and low viscosity even at high concentration is required.

In view of the above current situation, an object of the present invention is to provide a dispersion of a zirconium element-containing metal oxide having high transparency and low viscosity even at high concentration.

### - Solution to Problem

The present inventors have studied a method of producing a dispersion of a zirconium element-containing metal oxide having high transparency and low viscosity even at high concentration, and have found that if a heating speed during a hydrothermal reaction is set to a predetermined speed or more when the dispersion of the zirconium element-containing metal oxide is produced using a production method including a step of subjecting a slurry containing a zirconium element-containing compound to the hydrothermal reaction, a resulting dispersion of a zirconium element-containing metal oxide has high transparency and low viscosity even when the concentration of the resulting dispersion is high, thereby completing the present invention.

That is, the present invention is a method of producing a zirconium element-containing metal oxide dispersion, and the method includes a step of heating a slurry containing a zirconium element-containing compound as a metal element-containing compound to perform a hydrothermal reaction, in which the heating in the hydrothermal reaction step is performed at a temperature rising rate of 90°C/hour or more.

The slurry preferably includes an organic acid.

The slurry preferably includes only a zirconium element-containing compound as the metal element-containing compound.

The present invention is also directed to a zirconium element-containing metal oxide dispersion having a transmittance of light at a wavelength of 550 nm of 70% or more and a viscosity of 25 mPa·s or less in a form of a 48 wt% aqueous dispersion.

In the zirconium element-containing metal oxide dispersion, the average primary particle diameter of the zirconium element-containing metal oxide is preferably 3 to 20 nm.

### - Advantageous Effects of Invention

The method of producing a zirconium element-containing metal oxide dispersion of the present invention is an excellent method capable of producing a dispersion of a zirconium element-containing metal oxide having high transparency and low viscosity even at high concentration without performing complicated steps.

Since the zirconium element-containing metal oxide dispersion of the present invention has high transparency and low viscosity even at high concentration, the zirconium element-containing metal oxide dispersion can be suitably used for various applications including optical material applications.

### DESCRIPTION OF EMBODIMENTS

Although a preferred embodiment of the present invention will be specifically described below, the present invention is not limited to the following description, and modification may be suitably made without departing from the gist of the present invention.

### 1. Method of producing zirconium element-containing metal oxide dispersion

In the method of producing a zirconium element-containing metal oxide dispersion of the present invention, in a step of heating a slurry containing a zirconium element-containing compound to perform a hydrothermal reaction, a heating speed of the hydrothermal reaction is set to 90°C/hour or more.

The production method of the present invention is a useful method capable of producing a zirconium element-containing metal oxide dispersion having high transparency and low viscosity even at high concentration without adding a step to a conventional method of producing zirconium oxide. In addition, the production method of the present invention is also advantageous in that a thermal energy to be used can be reduced as compared with the prior art since a time until the temperature reaches a predetermined temperature is shortened as the heating speed of the hydrothermal reaction is high.

The temperature rising rate should be 90°C/hour or more, and is preferably 100°C/hour or more. The temperature is more preferably 110°C/hour or more, still more preferably 120°C/hour or more. There is no particular upper limit to the temperature rising rate, but is usually 250°C/hour or less in view of production equipment.

In the production method of the present invention, the temperature rising rate may not be constant as long as an average temperature raising rate obtained by dividing a temperature rise range from the start of temperature rise to the predetermined temperature by the time required for the temperature rise is 90°C/hour or more; however, from the viewpoint of producing a zirconium element-containing metal oxide dispersion having higher transparency and low viscosity even at high concentration, when the time from the start of temperature rise to the predetermined temperature is evenly divided into five sections, a variation in the temperature rising rate for each section is preferably 45% or less. The variation is more preferably 20% or less.

The temperature at which the hydrothermal reaction is performed is preferably 170°C to 230°C. By performing the reaction at such a temperature, the hydrothermal reaction can more sufficiently proceed, and a dispersion liquid having higher water dispersibility and higher transparency can be obtained. The temperature at which the hydrothermal reaction is performed is more preferably 175°C to 220°C, still more preferably 180°C to 210°C.

In addition, the time for performing the hydrothermal reaction is preferably 60 to 600 minutes considering proceeding the hydrothermal reaction more sufficiently and the production efficiency. The time is more preferably 100 to 360 minutes, still more preferably 150 to 300 minutes.

The zirconium element-containing compound contained in the slurry containing the zirconium element-containing compound is preferably a neutralized product obtained by reacting a raw material containing a zirconium compound with a basic compound in water.

Therefore, the method of producing a zirconium element-containing metal oxide dispersion of the present invention is preferably a production method including a step of reacting a raw material containing a zirconium compound with a basic compound in water to obtain a slurry containing a neutralized product containing the zirconium element, and the hydrothermal reaction step using the slurry containing the zirconium element-containing compound which is the neutralized product containing the zirconium element.

In the step of obtaining the slurry containing the neutralized product containing the zirconium element by reacting the raw material containing the zirconium compound with the basic compound in water, the raw material excluding the basic compound is used as an aqueous solution or an aqueous dispersion, and the basic compound may be added thereto to obtain a neutralized product, the raw material excluding the basic compound may be added to the aqueous solution of the basic compound to obtain a neutralized product, or both of the raw material excluding the basic compound and the basic compound may be gradually added in water to obtain a neutralized product. Among these, it is preferable to gradually add both of the raw material excluding the basic compound and the basic compound in water to obtain a neutralized product. In this way, particles having a more uniform particle diameter can be produced. In this case, preferably, the raw material excluding the basic compound is used as an aqueous solution or an aqueous dispersion, and the basic compound is also used as an aqueous solution, and then gradually added to water from the viewpoint of more uniformly proceeding the reaction.

The water used for the aqueous solution or aqueous dispersion is not limited, and examples thereof include pure water, ion-exchanged water, distilled water, industrial water, and tap water; however, a water-soluble or water-miscible compound such as methanol, ethanol, isopropanol, acetone, ethylene glycol, diethylene glycol, and the like may be contained as long as the reaction is not inhibited.

The same applies to specific examples of the solvent of the slurry containing the zirconium element-containing compound to be subjected to the hydrothermal reaction step.

The concentration of the zirconium compound in the aqueous solution or aqueous dispersion of the raw material containing the zirconium compound is not limited, if the concentration is too low, an amount of wastewater in the next step becomes too large, and if the concentration is high, the viscosity of the slurry containing the neutralized product becomes high, and it may be difficult to handle the slurry such as stirring or feeding, and thus the concentration is preferably 0.2 to 5 mol/L. The concentration is more preferably 0.5 to 3 mol/L.

Examples of the zirconium compound used as a raw material for producing the slurry containing the zirconium element-containing compound include hydroxide, oxidized hydroxide, chloride, sulfide, sulfate, nitrate, carbonate, hydrogen carbonate, acetate, phosphate, oxalate, butyrate, selenate, iodate, fluoride, and oxychloride. Among them, oxychloride, chloride, sulfate, nitrate, acetate, and the like, which are water-soluble zirconium compounds suitable for production, are preferable.

The raw material used for producing the slurry containing the zirconium element-containing compound may contain a compound of another metal element as long as it contains a zirconium compound.

Examples of other metal elements include cerium and yttrium.

Examples of the compounds of other metal elements include the same compounds as those of the zirconium compound.

When the raw material contains a zirconium compound and a compound of another metal element, the content of the compound of another metal element is preferably an amount in which the other metal element contained in the compound of another metal element is 0.01 to 1 mole with respect to 1 mole of the zirconium element contained in the zirconium compound. The content is more preferably an amount in which the other metal element is 0.015 to 0.5 moles, still more preferably 0.02 to 0.2 moles.

Examples of the basic compound used for neutralizing the raw material containing the zirconium compound include lithium hydroxide, sodium hydroxide, potassium hydroxide, magnesium hydroxide, calcium hydroxide, barium hydroxide, lithium carbonate, sodium carbonate, potassium carbonate, potassium sodium carbonate, sodium hydrogen carbonate, potassium hydrogen carbonate, ammonium hydrogen carbonate, lithium sulfite, sodium sulfite, potassium sulfite, lithium nitrite, sodium nitrite, potassium nitrite, lithium oxalate, sodium oxalate, potassium oxalate, lithium acetate, sodium acetate, potassium acetate, calcium acetate, barium acetate, lithium formate, sodium formate, potassium formate, lithium benzoate, sodium benzoate, potassium benzoate, lithium phenoxide, sodium phenoxide, potassium phenoxide, lithium methoxide, sodium methoxide, potassium methoxide, lithium ethoxide, sodium ethoxide, potassium ethoxide, lithium phosphate, trisodium phosphate, disodium hydrogen phosphate, tripotassium phosphate, dipotassium hydrogen phosphate, triammonium phosphate, trisodium citrate, tripotassium citrate, lithium sulfide, sodium sulfide, potassium sulfide, sodium hypochlorite, potassium hypochlorite, ammonia, methylamine, diethylamine, and hydrazine, and one or two or more of these can be used.

An amount of the basic compound used is not limited as long as a neutralization product can be obtained, and the amount is usually preferably 0.1 to 10 moles with respect to 1 mole of the total of all metal elements including zirconium contained in the raw material.

A ratio of the metal element-containing compound in the slurry containing the zirconium element-containing compound is preferably 0.1 to 20 wt%. With such a ratio, the ratio of the metal element-containing compound in the slurry is not too small, and the viscosity of the slurry is suitable, so that the hydrothermal reaction can be sufficiently proceeded to obtain a sufficient amount of the zirconium element-containing metal oxide dispersion. In the case of performing a step of filtering and washing the slurry containing the zirconium element-containing compound described later, when the ratio of the metal element-containing compound in the slurry is in such a range, sufficient washing can be performed, and the dispersion obtained through the hydrothermal reaction step can have more excellent transparency and a lower viscosity at high concentration. The ratio of the metal element-containing compound in the slurry is more preferably 0.2 to 17 wt%, still more preferably 0.5 to 15 wt%.

Here, the metal element-containing compound in the slurry means the zirconium element-containing compound when the slurry includes only the zirconium element-containing compound as the metal element-containing compound, and means the zirconium element-containing compound and another metal element-containing compound when the slurry also includes another metal element-containing compound.

In the production method of the present invention, the slurry containing the zirconium element-containing compound to be subjected to the hydrothermal reaction preferably includes an organic acid. By including the organic acid, the slurry is acid-deflocculated, and particles are repelled by electrostatic interaction, thereby the produced dispersion has high transparency.

Therefore, the production method of the present invention preferably includes a step of adding an organic acid to the slurry before the hydrothermal reaction step. When the production method of the present invention includes a step of reacting a raw material containing a zirconium compound with a basic compound in water to obtain a slurry containing a neutralized product containing a zirconium element, it is preferable to include a step of adding an organic acid to the slurry after the step of obtaining the slurry.

The organic acid is not limited, and it is possible to use one or two or more of monocarboxylic acids such as formic acid, acetic acid, and propionic acid, and salts thereof; polybasic acids such as oxalic acid, malonic acid, succinic acid, fumaric acid, and maleic acid, and salts thereof; hydroxycarboxylic acids such as lactic acid, malic acid, tartaric acid, citric acid, and gluconic acid, and salts thereof; and the like.

Examples of the salt of the organic acid include alkali metal salts such as a sodium salt and a potassium salt, alkaline earth metal salts such as a calcium salt and a barium salt, and magnesium salts.

An amount of the organic acid used is preferably 0.5 to 10 moles with respect to 1 mole of the metal element-containing compound contained in the slurry. When the organic acid is used in such a ratio, the resulting zirconium element-containing metal oxide dispersion has more excellent transparency at high concentration. On the other hand, even if the amount used is too large, the effect cannot be obtained. Thus, the amount of the organic acid used is more preferably 1 to 5 moles, still more preferably 1 to 3 moles with respect to 1 mole of the metal element-containing compound.

The production method of the present invention preferably includes, after the step of reacting the raw material containing the zirconium compound with the basic compound in water to obtain the slurry containing the neutralized product containing the zirconium element, a step of filtering the slurry and a step of washing the slurry after filtering.

For example, when a step of obtaining a slurry containing a neutralized product using zirconium oxychloride as the zirconium compound contained in the raw material and potassium hydroxide as the basic compound is performed, potassium chloride is contained as a by-product salt in the obtained slurry. By performing the step of filtering the slurry before the hydrothermal reaction step or the step of washing the slurry after filtering to remove the by-product salt, the dispersion obtained by the hydrothermal reaction can be made into a dispersion having more excellent dispersibility and high transparency even at high concentration.

The step of filtering the slurry containing the neutralized product containing the zirconium element and the step of washing the slurry after filtering are preferably performed before the step of adding an organic acid to the slurry.

The production method of the present invention may include a step of washing the obtained zirconium element-containing metal oxide dispersion after a hydrothermal treatment step. The washing method is not limited, and filtration using an ultrafiltration membrane, ion exchange with an ion exchange resin, dialysis using a semipermeable membrane, or the like can be used. Among these, filtration using the ultrafiltration membrane is preferable. By filtration using the ultrafiltration membrane, a residual by-product salt contained in the dispersion can be removed and the dispersion can be concentrated to obtain a dispersion having a higher concentration.

If necessary, a solvent is added to the dispersion concentrated by filtration using the ultrafiltration membrane, and filtration using the ultrafiltration membrane is repeated again, whereby the residual by-product salt can be more sufficiently removed.

The production method of the present invention may include other steps other than the above-described steps. Examples of the other steps include a step of preparing an aqueous solution by dissolving a raw material powder in water, a step of enhancing dispersibility by ultrasonic waves and the like, a step of pulverizing a zirconium element-containing metal oxide in a dispersion, a step of adjusting pH of the dispersion, a step of adjusting the temperature of the dispersion, a step of further desalting the dispersion, and a step of additionally adding a dispersant and the like depending on use of the dispersion.

The production method of the present invention is a production method that can be used for not only for producing zirconium oxide, but also for producing a composite oxide including a zirconium element and other metal elements. However, the production method of the present invention is a method particularly suitable for the production of a zirconium oxide dispersion that has high transparency and low viscosity even at high concentration, and is suitable for optical material applications. Therefore, it is one of preferred embodiments of the production method of the present invention that the production method of the present invention is a production method in which a hydrothermal reaction step is performed using a slurry including only a zirconium element-containing compound as a metal element-containing compound.

### 2. Zirconium element-containing metal oxide dispersion

The present invention is also directed to a zirconium element-containing metal oxide dispersion having a light transmittance at a wavelength of 550 nm of 70% or more and a viscosity of 25 mPa·s or less in a form of a 48 wt% aqueous dispersion.

As described above, since the transparency of the zirconium element-containing metal oxide dispersion generally depends on the primary particle diameter of the zirconium element-containing metal oxide, it is preferable to use a zirconium element-containing metal oxide having a small primary particle diameter in order to obtain a highly transparent dispersion. However, on the other hand, since the zirconium element-containing metal oxide having a small primary particle diameter tends to aggregate, when the zirconium element-containing metal oxide is blended in a resin, large amount of dispersant is needed in order to sufficiently disperse the zirconium element-containing metal oxide in the resin. In general, since the dispersant has a low refractive index, it becomes difficult to improve the refractive index of the resin composition as a result. On the other hand, since the zirconium element-containing metal oxide dispersion of the present invention has high transparency and a low-viscosity even when made into a high-concentration aqueous dispersion, it is not necessary to use a large amount of dispersant even when the dispersion is blended in a resin. Thus, the zirconium element-containing metal oxide dispersion can be suitably used for various applications such as optical material applications.

When the zirconium element-containing metal oxide dispersion is a 48 wt% aqueous dispersion, the light transmittance at a wavelength of 550 nm is preferably 72% or more. The light transmittance is more preferably 75% or more, still more preferably 78% or more.

When the 48 wt% aqueous dispersion is used, the viscosity is preferably 23 mPa·s or less.

The light transmittance and the viscosity of the aqueous dispersion of the zirconium element-containing metal oxide can be measured by the method described in Examples described later.

In the zirconium element-containing metal oxide dispersion, the average primary particle diameter of the zirconium element-containing metal oxide contained in the dispersion is preferably 3 to 20 nm. When the zirconium element-containing metal oxide having such an average primary particle diameter is used, in a case where the zirconium element-containing metal oxide dispersion is blended for increasing the refractive index of the resin composition, the amount of the dispersant to be blended for dispersing the zirconium element-containing metal oxide in the resin can be further reduced, thereby the resin composition can have a higher refractive index.

The average primary particle diameter of the zirconium element-containing metal oxide is more preferably 3 to 18 nm, still more preferably 3 to 15 nm.

The average primary particle diameter of the zirconium element-containing metal oxide can be measured by a method in which the particle diameters of 200 primary particles randomly selected are measured using a transmission electron microscope, and the average of the primary particle diameters is calculated.

Although the zirconium element-containing metal oxide dispersion may include the zirconium element and other metal elements, since the zirconium oxide dispersion having high transparency and low viscosity as described above is suitable for optical material applications, it is one of preferred embodiments of the present invention that the zirconium element-containing metal oxide dispersion is a zirconium oxide dispersion including only the zirconium element as a metal element.

### Examples

Specific examples will be given below in order to describe the present invention in detail, but the present invention is not limited to these examples. A method of measuring each physical property is as follows.

The transmittance and viscosity of the zirconium oxide aqueous dispersions of Examples and Comparative Examples were measured as follows.

### <Transmittance measurement >

A zirconium element-containing metal oxide dispersion was placed in a glass square cell having an optical path length of 10 mm, this cell was set in a sample chamber of a haze meter "NDH 4000" manufactured by NIPPON DENSHOKU INDUSTRIES Co., Ltd., and the transmittance was measured.

### <Viscosity measurement>

Using a tuning fork vibration viscometer "SV-1H" manufactured by A & D Company, Limited, the viscosity of the zirconium element-containing metal oxide dispersion was measured under a room temperature environment.

### Example 1

0.24 L of a 0.6 mol/L zirconium oxychloride aqueous solution and 0.18 L of a 1.7 mol/L potassium hydroxide aqueous solution were simultaneously poured into a reaction vessel filled with 0.22 L of ion-exchanged water to obtain a zirconium hydroxide slurry. The obtained slurry was filtered and washed, 104.7 g of acetic acid (1.3 parts by mol with respect to 1 part by mole of zirconium contained in the slurry) was added thereto, and the mixture was stirred to obtain 1.5 L of a slurry (zirconium oxide precursor slurry) in which a content of zirconium hydroxide in the slurry was 10 wt%.

The obtained zirconium oxide precursor slurry was poured into a pressure vessel, heated at a temperature rising rate of 180°C/hour from room temperature, and subjected to a hydrothermal treatment reaction at 200°C for 3 hours. As a result, a thin translucent zirconium oxide aqueous dispersion was obtained. This dispersion was washed with an ultrafiltration membrane to obtain a zirconium oxide dispersion having a zirconium oxide content of 30 wt%. The aqueous dispersion had a light transmittance of 87.9% at a wavelength of 550 nm and a viscosity of 5.7 mPa·s. The concentration of this aqueous dispersion was further advanced using the ultrafiltration membrane to obtain a zirconium oxide dispersion having a zirconium oxide content of 48 wt%. The aqueous dispersion had a light transmittance of 84.1% at a wavelength of 550 nm and a viscosity of 20.4 mPa·s.

### Example 2

A slurry (zirconium oxide precursor slurry) having a content of zirconium hydroxide of 10 wt% obtained in the same manner as in Example 1 was poured into a pressure vessel, heated at a temperature rising rate of 165°C/hour from room temperature, and subjected to the hydrothermal treatment reaction at 200°C for 3 hours. As a result, a thin translucent zirconium oxide aqueous dispersion was obtained. This dispersion was washed with an ultrafiltration membrane to obtain a zirconium oxide dispersion having a zirconium oxide content of 30 wt%. The aqueous dispersion had a light transmittance of 86.4% at a wavelength of 550 nm and a viscosity of 4.6 mPa·s. The concentration of this aqueous dispersion was further advanced using the ultrafiltration membrane to obtain a zirconium oxide dispersion having a zirconium oxide content of 48 wt%. The aqueous dispersion had a light transmittance of 83.1% at a wavelength of 550 nm and a viscosity of 17.4 mPa·s.

### Example 3

A slurry (zirconium oxide precursor slurry) having a content of zirconium hydroxide of 10 wt% obtained in the same manner as in Example 1 was poured into a pressure vessel, heated at a temperature rising rate of 113°C/hour from room temperature, and subjected to the hydrothermal treatment reaction at 200°C for 3 hours. As a result, a thin translucent zirconium oxide aqueous dispersion was obtained. This dispersion was washed with an ultrafiltration membrane to obtain a zirconium oxide dispersion having a zirconium oxide content of 30 wt%. The aqueous dispersion had a light transmittance of 80.7% at a wavelength of 550 nm and a viscosity of 6.0 mPa·s. The concentration of this aqueous dispersion was further advanced using the ultrafiltration membrane to obtain a zirconium oxide dispersion having a zirconium oxide content of 48 wt%. The aqueous dispersion had a light transmittance of 76.1% at a wavelength of 550 nm and a viscosity of 21.1 mPa·s.

### Example 4

A slurry (zirconium oxide precursor slurry) having a content of zirconium hydroxide of 10 wt% obtained in the same manner as in Example 1 was poured into a pressure vessel, heated at a temperature rising rate of 96°C/hour from room temperature, and subjected to the hydrothermal treatment reaction at 200°C for 3 hours. As a result, a thin translucent zirconium oxide aqueous dispersion was obtained. This dispersion was washed with an ultrafiltration membrane to obtain a zirconium oxide dispersion having a zirconium oxide content of 30 wt%. The aqueous dispersion had a light transmittance of 78.5% at a wavelength of 550 nm and a viscosity of 5.7 mPa·s. The concentration of this aqueous dispersion was further advanced using the ultrafiltration membrane to obtain a zirconium oxide dispersion having a zirconium oxide content of 48 wt%. The aqueous dispersion had a light transmittance of 72.8% at a wavelength of 550 nm and a viscosity of 24.5 mPa·s.

### Comparative Example 1

1.5 L of a slurry (zirconium oxide precursor slurry) having a content of zirconium hydroxide of 10 wt% obtained in the same manner as in Example 1 was poured into a pressure vessel, heated at a temperature rising rate of 75°C from room temperature, and subjected to the hydrothermal treatment reaction at 200°C for 3 hours. As a result, a translucent zirconium oxide aqueous dispersion was obtained. This dispersion was washed with an ultrafiltration membrane to obtain a zirconium oxide dispersion having a zirconium oxide content of 30 wt%. The aqueous dispersion had a light transmittance of 73.6% at a wavelength of 550 nm and a viscosity of 5.9 mPa·s. The desalination of this aqueous dispersion was further advanced using the ultrafiltration membrane to obtain a zirconium oxide dispersion having a zirconium oxide content of 48 wt%. The aqueous dispersion had a light transmittance of 66.4% at a wavelength of 550 nm and a viscosity of 30.1 mPa·s.

### Comparative Example 2

1.5 L of a slurry (zirconium oxide precursor slurry) having a content of zirconium hydroxide of 10 wt% obtained in the same manner as in Example 1 was poured into a pressure vessel, heated at a temperature rising rate of 80°C from room temperature, and subjected to the hydrothermal treatment reaction at 200°C for 3 hours. As a result, a translucent zirconium oxide aqueous dispersion was obtained. This dispersion was washed with an ultrafiltration membrane to obtain a zirconium oxide dispersion having a zirconium oxide content of 30 wt%. The aqueous dispersion had a light transmittance of 75.4% at a wavelength of 550 nm and a viscosity of 5.5 mPa·s. The desalination of this aqueous dispersion was further advanced using the ultrafiltration membrane to obtain a zirconium oxide dispersion having a zirconium oxide content of 48 wt%. The aqueous dispersion had a light transmittance of 69.0% at a wavelength of 550 nm and a viscosity of 29.2 mPa·s.

**[Table 1]**

| | Hydrothermal reaction Temperature rising rate | Normal concentration (30 wt%) | | High concentration (48 wt%) | |
|---|---|---|---|---|---|
| | | Transmittance | Viscosity | Transmittance | Viscosity |
| Example 1 | 180° C/h | 87.9% | 5.7 mPa·s | 84.1% | 20.4 mPa·s |
| Example 2 | 165° C/h | 86.4% | 4.6 mPa·s | 83.1% | 17.4 mPa·s |
| Example 3 | 113° C/h | 80.7% | 6.0 mPa·s | 76.1% | 21.1 mPa·s |
| Example 4 | 96° C/h | 78.5% | 5.7 mPa·s | 72.8% | 24.5 mPa·s |
| Comparative Example 1 | 75° C/h | 73.6% | 5.9 mPa·s | 66.4% | 30.1 mPa·s |
| Comparative Example 2 | 80° C/h | 75.4% | 5.5 mPa·s | 69.0% | 29.2 mPa·s |

As shown in Table 1, it was confirmed that the zirconium oxide dispersions of Examples 1 to 4 produced by performing the hydrothermal reaction step at the temperature rising rate corresponding to the production method of the present invention had high transparency even at high concentration in addition to a normal concentration as compared with the zirconium oxide dispersions of Comparative Examples 1 and 2 produced by performing the hydrothermal reaction step at the temperature rising rate not corresponding to the production method of the present invention. In addition, it was confirmed that although the zirconium oxide dispersions of Examples 1 to 4 and the zirconium oxide dispersions of Comparative Examples 1 and 2 had similar viscosities at the normal concentration, thickening of the zirconium oxide dispersions of Comparative Examples 1 and 2 was larger than that of the zirconium oxide dispersions of Examples 1 to 4 at high concentration. From this result, the effect of production by the production method of the present invention was confirmed.

## Claims

1. A method of producing a zirconium element-containing metal oxide dispersion, the method comprising a step of heating a slurry containing a zirconium element-containing compound as a metal element-containing compound to perform a hydrothermal reaction,
the heating in the hydrothermal reaction step being performed at a temperature rising rate of 90°C/hour or more.

2. The method of producing a zirconium element-containing metal oxide dispersion according to claim 1, wherein the slurry includes an organic acid.

3. The method of producing a zirconium element-containing metal oxide dispersion according to claim 1 or 2, wherein the slurry includes only a zirconium element-containing compound as the metal element-containing compound.

4. A zirconium element-containing metal oxide dispersion having a transmittance of light at a wavelength of 550 nm of 70% or more and a viscosity of 25 mPa·s or less in a form of a 48 wt% aqueous dispersion.

5. The zirconium element-containing metal oxide dispersion according to claim 4, wherein an average primary particle diameter of the zirconium element-containing metal oxide is 3 to 20 nm.
